# EUROPÄISCHE PATENTSCHRIFT

(11) **EP 3 749 469 B1**
(45) Veröffentlichungstag und Bekanntmachung des Hinweises auf die Patenterteilung: **07.06.2023**
(21) Anmeldenummer: 19703975.3
(22) Anmeldetag: 04.02.2019
(51) Int. Cl.: B21D 35/00, C21D 6/00, C21D 7/00, C22C 38/04

(54) **VERFAHREN ZUR HERSTELLUNG EINES BAUTEILS DURCH WARMUMFORMEN EINES VORPRODUKTES AUS MANGANHALTIGEM STAHL UND EIN WARMUMGEFORMTES STAHLBAUTEIL**
METHOD FOR PRODUCING A COMPONENT BY HOT-FORMING A PRECURSOR PRODUCT MADE OF STEEL CONTAINING MANGANESE, AND A HOT-FORMED STEEL COMPONENT
PROCÉDÉ DE FABRICATION D'UN ÉLÉMENT STRUCTURAL PAR FORMAGE À CHAUD D'UN PRODUIT PRIMAIRE EN ACIER MANGANÉSIFÈRE ET ÉLÉMENT STRUCTURAL FORMÉ À CHAUD

(30) Priorität: 09.02.2018 DE 102018102974
(43) Veröffentlichungstag der Anmeldung: 16.12.2020
(73) Patentinhaber: Salzgitter Flachstahl GmbH, 38239 Salzgitter (DE)
(72) Erfinder: EVERTZ, Thomas, 47251 Duisburg (DE); PALZER, Peter, 47251 Duisburg (DE); KÖHLER, Kai, 47251 Duisburg (DE)
(74) Vertreter: Moser Götze & Partner Patentanwälte mbB
(86) Internationale Anmeldenummer: PCT/EP2019/052614
(87) Internationale Veröffentlichungsnummer: WO 2019/154753

(56) Entgegenhaltungen:
- EP-B1- 2 547 800
- WO-A1-2011/141367
- WO-A1-2017/128478
- CN-A- 104 233 059
- SI WOO HWANG, JUNG HOON JI, EUI GIL LEE, KYUNG-TAE PARK: "Tensile deformation of a duplex Fe-20Mn-9Al-0.6C steel having the reducedspecific weight", MATERIALS SCIENCE AND ENGINEERING A, Bd. 528, 17. März 2011 (2011-03-17), Seiten 5196-5203, XP002789789,

## Beschreibung

Die Erfindung betrifft ein Verfahren zur Herstellung eines Bauteils durch Warmumformen eines Vorproduktes aus manganhaltigem Stahl. Die Erfindung bezieht sich insbesondere auf mehrphasige Stähle mit mehr als 12 Gewichts-% Mangan, welche einen TRIP und/oder TWIP-Effekt aufweisen. Als Vorprodukte für die Warmumformung werden nachfolgend z. B. vom Stahlband geschnittene Bleche oder Platinenzuschnitte oder nahtlose bzw. geschweißte Rohre, die fallweise zusätzlich kaltgezogen sein können, verstanden. Auch betrifft die Erfindung ein mit diesem Verfahren hergestelltes, warmumgeformtes Bauteil und ein Verfahren zur Herstellung eines Stahlbandes als Vorprodukt zum Warmumformen eines Bauteils.

Derartige durch Warmumformung hergestellte Bauteile werden hauptsächlich in der Automobil- und Nutzfahrzeugindustrie verwendet, aber auch im Maschinenbau zur Herstellung weißer Ware oder im Bauwesen bieten sich Einsatzmöglichkeiten.

Der heiß umkämpfte Markt zwingt die Automobilhersteller ständig, nach Lösungen zur Senkung ihres Flottenverbrauches unter Beibehaltung eines höchstmöglichen Komforts und Insassenschutzes zu suchen. Dabei spielt einerseits die Gewichtsersparnis aller Fahrzeugkomponenten eine entscheidende Rolle, andererseits aber auch ein möglichst günstiges Verhalten der einzelnen Bauteile bei hoher statischer und dynamischer Beanspruchung im Betrieb wie auch im Crashfall.

Darüber hinaus stellt die Reduzierung des CO₂-Ausstoßes entlang der gesamten Fertigungskette eine besondere Herausforderung dar, die durch innovative verfahrenstechnische Lösungen angenommen wird. Im Fokus stehen insbesondere Prozessschritte, die direkt oder indirekt auf der Verbrennung fossiler Brennstoffe basieren.

Dieser Notwendigkeit versuchen die Vormateriallieferanten dadurch Rechnung zu tragen, dass durch die Bereitstellung hoch- und höchstfester Stähle die Wanddicken reduziert werden können bei gleichzeitig verbessertem Bauteilverhalten bei der Fertigung und im Betrieb.

Diese Stähle müssen daher vergleichsweise hohen Anforderungen hinsichtlich Festigkeit, Dehnfähigkeit, Zähigkeit, Energieaufnahme und Korrosionsbeständigkeit sowie ihrer Verarbeitbarkeit, beispielsweise bei der Umformung und beim Schweißen, genügen.

Unter den vorgenannten Aspekten gewinnt die Herstellung von Bauteilen aus warmumformbaren Stählen zunehmend an Bedeutung, da diese bei geringerem Materialaufwand die gestiegenen Anforderungen an die Bauteileigenschaften ideal erfüllen.

Die Offenlegungsschrift WO 2017/128 478 A1 beschreibt ein Verfahren zum Umformen von einem Stahlmaterial mit TRIP- und/oder TRIP-ZTWIP-Eigenschaften, das in Gew.-% 12-30 Mn; 0,4-1,2 C; bis zu 2 Si; bis zu 3 AI; bis zu 0,7 V und Rest Fe und unvermeidbare Verunreinigungen enthält und dessen Gefüge nach dem Umformvorgang 95% oder mehr Austenitgehalt aufweist, sowie ein daraus resultierendes Umformelement.

Die Offenlegungsschriften WO 2005 061 152 A1 und US 2007 028 97 17 A1 offenbaren ein Verfahren zum Erzeugen von Warmbändern aus einem umformbaren Leichtbaustahl, der aus den Hauptelementen Al, Si und Mn (9 - 30 Gew.-%) besteht und neben einer hohen Zugfestigkeit TRIP- und/oder TWIP-Eigenschaften aufweist. Über den Austenitgehalt im Stahl wird keine Angabe gemacht.

Die Offenlegungsschrift US 2012 007 03 30 A1 betrifft ein hochfestes Stahlband, das in Gew.-% 0,25 - 0,5 C; 4 - 14 Mn; 6,5 - 9,5 Cr; 0,3 - 3 Si enthält und im Wesentlichen ein Austenitgefüge aufweist. Ein TWIP-Effekt wird weitestgehend reduziert, wobei ein TRIP-Effekt während der Austenitbildung erhöht wird. Der Mindestgehalt des kostenintensiven Legierungselements Cr ist mit 6,5 Gew.-% bereits sehr hoch. Außerdem ist das hochfeste Stahlband im Ausgangszustand nahezu vollaustenitisch.

Die Offenlegungsschrift WO 1999 001 585 A1 offenbart einen hochfesten, austenitischen Leichtbaustahl, der neben TRIP und TWIP Eigenschaften gut kaltumformbar sein soll und folgende chemische Zusammensetzung in Gew.-% aufweist: 1 - 6 Si; 1 - 8 Al; 10 - 30 Mn, Rest im wesentlichen Eisen einschließlich üblicher Stahlbegleitelemente. über eine Umformung und hierbei verwendete Temperaturen finden sich keine Angaben.

Die Patentschrift DE 10 2011 121 679 B4 beschreibt ein Verfahren zur Herstellung von Bauteilen aus einem im Ausgangszustand vollaustenitischen Leichtbaustahl, der einen temperaturabhängigen TRIP- und/oder TWIP-Effekt aufweist. Zur Erzielung unter anderem einer hohen Zähigkeit des Bauteils wird vorgeschlagen, die Umformung bei einer Temperatur oberhalb Raumtemperatur durchzuführen, zwischen 50 und 150°C. Eine hohe Bauteilfestigkeit soll erzielt werden, indem bei einer Temperatur unterhalb der Raumtemperatur zwischen 0 und -60°C umgeformt wird. Als Umformverfahren werden Walzen, Tiefziehen und Innenhochdruckumformen angegeben.

Die Herstellung von gehärteten Bauteilen mittels Abschreckung von Blechen bzw. Platinen als Vorprodukt aus presshärtbaren Stählen durch Warmumformen in einem Umformwerkzeug ist aus der Patentschrift DE 601 19 826 T2 bekannt. Hier wird eine zuvor oberhalb der Austenitisierungstemperatur auf 800 - 1200°C erwärmte und ggf. mit einem metallischen Überzug aus Zink oder auf Basis von Zink versehene Blechplatine in einem fallweise gekühlten Werkzeug durch Warmumformung zu einem Bauteil umgeformt, wobei während des Umformens oder nach dem Warmumformen durch schnellen Wärmeentzug das Blech bzw. Bauteil im Umformwerkzeug eine Abschreckhärtung (Presshärtung) erfährt und dadurch die geforderten Gefüge- und Festigkeitseigenschaften erreicht.

Der als Korrosionsschutz aufgebrachte metallische Überzug der Bleche bzw. Platinen wird üblicherweise im kontinuierlichen Schmelztauchverfahren auf ein Warm- oder Kaltband bzw. auf das daraus hergestellte Vorprodukt aufgebracht, z. B. als Feuerverzinkung oder Feueraluminierung.

Anschließend wird die Platine für das Umformwerkzeug der Warmumformung passend zugeschnitten. Möglich ist auch, das jeweils umzuformende Werkstück, bzw. den Zuschnitt, mit einem Schmelztauchüberzug zu versehen.

Das Aufbringen eines metallischen Überzugs auf das umzuformende Vorprodukt vor dem Warmumformen ist bei diesem Verfahren von Vorteil, weil durch den Überzug im Zuge der Presshärtung eine nachteilige Veränderung der Oberfläche des Stahlsubstrats durch Verzunderung des Grundmaterials und durch eine zusätzliche Schmierwirkung übermäßiger Werkzeugverschleiß wirksam vermieden werden kann.

Bekannte zum Presshärten geeignete Stähle für diesen Einsatzbereich sind z. B. Mangan-Bor-Stähle, z.B. der "22MnB5".

Die Herstellung eines Bauteils durch Warmumformen mittels Presshärtung weist jedoch mehrere Nachteile auf.

Zum einen benötigt dieses Verfahren durch die Aufheizung des Vorproduktes auf die Austenitisiertemperatur an sich sowie zusätzlich für die Umwandlung von Ferrit in Austenit sehr viel Energie, was das Verfahren teuer macht und zu einem erheblichen CO₂-Ausstoß führt.

Außerdem ist zur Vermeidung einer übermäßigen Verzunderung der Blechoberfläche, wie oben beschrieben, eine zusätzliche metallische Schutzschicht oder eine Schutzschicht auf Lackbasis oder eine erhebliche Nacharbeit der durch Erwärmung und Umformung verzunderten Oberfläche notwendig.

Da die Umformung bei Temperaturen oberhalb der Ac3-Temperatur, in der Regel deutlich oberhalb 800°C, erfolgt, werden zudem extrem hohe Anforderungen bezüglich der Temperaturstabilität an diese Schutzschichten gestellt, so dass ein kathodischer Korrosionsschutz des Vorproduktes auf einer Basis von Zink hier nur eingeschränkt und mit erhöhtem Verfahrensaufwand einsetzbar ist, da das Zink bei diesen Temperaturen stark mit dem Atmosphärensauerstoff reagiert und beim Umformen zu flüssigmetallinduzierten Rissen führt. Demzufolge werden zur Presshärtung vorwiegend Stahlbleche mit einer AlSi-Beschichtung eingesetzt, die aber keinen kathodischen Korrosionsschutz des umgeformten Bauteils bietet.

Ein weiterer Nachteil ist, dass das umgeformte Bauteil im Umformwerkzeug selbst, einem weiteren Werkzeug außerhalb der Umformpresse oder unter Einsatz von gasförmigen oder flüssigen Medien beschleunigt abgekühlt werden muss, um die gewünschte Festigkeit zu erreichen. Die Dauer dieses Abkühlvorgangs reduziert den Durchsatz von Bauteilen pro Zeiteinheit deutlich, wodurch die Wirtschaftlichkeit herabgesetzt wird.

Zusammengefasst ist festzustellen, dass das bekannte Verfahren zur Herstellung von Bauteilen aus Stahl durch Warmumformung mittels Presshärten oberhalb der Austenitisierungstemperatur Ac3 aufgrund der erforderlichen großen Erwärmöfen verbunden mit langen Aufheizzeiten und der abschließend notwendigen Abkühlung des Bauteils im Werkzeug zu hohen Fertigungs- und Energiekosten und damit hohen Bauteilkosten führt. Zudem kann kein kathodischer Korrosionsschutz durch Aufbringen einer Beschichtung vor dem Erwärmen und der Umformung gewährleistet werden.

Um die Nachteile der Pressformhärtung zu beseitigen, ist es bekannt, Stahlbleche mittels einer sogenannten Halbwarmumformung unterhalb der Ac3- bzw. Ac1-Temperatur zu einem Bauteil umzuformen.

Die Offenlegungsschrift DE 10 2013 009 232 A1 offenbart ein Verfahren zur Herstellung eines Bauteils durch Halbwarmumformen eines Vorproduktes aus Stahl, bei dem das Vorprodukt auf Umformtemperatur erwärmt und anschließend umgeformt wird, wobei das Bauteil nach der Umformung eine bainitische Gefügestruktur mit einer Mindestzugfestigkeit von 800 MPa aufweist. Die Erwärmung erfolgt auf eine Temperatur unterhalb der Ac1-Umwandlungstemperatur, wobei schon das Vorprodukt aus einem Stahl mit einem Gefüge aus mindestens 50% Bainit besteht, und wobei das Vorprodukt folgende Legierungszusammensetzung in Gewichts-% aufweist: C: 0,02 bis 0,3; Si: 0,01 bis 0,5; Mn: 1,0 bis 3,0; P: max. 0,02; S: max. 0,01; N: max. 0,01; Al: bis 0,1; Cu: bis 0,2; Cr: bis 3,0; Ni: bis 0,2; Mo: bis 0,2; Ti: bis 0,2; V: bis 0,2; Nb: bis 0,1 und B: bis 0,01.

Obwohl mit diesem Legierungskonzept schon Bauteile mit sehr hoher Zugfestigkeit von über 800 MPa und einer Dehnung von über 10% hergestellt werden können und ein kathodischer Korrosionsschutz aus Zink realisierbar ist, erfüllt das Umformvermögen dieses Werkstoffs noch nicht höchste Anforderungen für die Herstellung komplexer Bauteilgeometrien. Insbesondere sind die erreichte Bruchdehnung sowie die Festigkeit noch für viele Anforderungen zu gering.

Aus der europäischen Offenlegungsschrift EP 2 778 247 A1 ist ein Verfahren zur Herstellung eines Bauteils aus einem manganhaltigen Stahl bekannt, wobei die Umformung in einem Temperaturbereich zwischen Ac1 und Ac3 stattfindet. Der Stahl besteht aus den folgenden Elementen (Gehalte in Gewichtsprozent und bezogen auf die Stahlschmelze): C: 0,01 bis 0,5; Si: 3,0 oder weniger (ausgeschlossen 0%); Mn: 3 bis 15; Al: 3,0 oder weniger (ausgeschlossen 0%); N: 0,03 oder weniger (ausgeschlossen 0%); P: 0,0001 bis 0,1; S: 0,0001 bis zu 0,03 sowie Rest Eisen und unvermeidbare Verunreinigungen. Optional sind ein oder mehrere Elemente von Cr, Mo, W, Ti, Nb, Zr, V, Cu, Ni, Sb, Sn oder B zugegeben. Dieser Stahl soll sich dadurch auszeichnen, dass dieser eine hohe Festigkeit, eine hohe Bruchdehnung und damit einhergehend ein verbessertes Crashverhalten sowie einen guten Korrosionswiderstand des warmumgeformten Bauteils aufweist.

Nachteilig ist hierbei, dass die notwendige Umformung im Bereich zwischen Ac1 und Ac3 noch hohe Energiekosten verursacht und zum Erreichen der Bauteileigenschaften nach der Warmumformung ein Kühlschritt erforderlich ist, der die Herstellkosten verteuert. Zudem ist die Temperaturbelastung des Umformwerkzeugs und damit der Verschleiß noch zu hoch.

Aus der Offenlegungsschrift WO 2017/157770 A1 ist ebenfalls ein Verfahren zur Herstellung eines warmumgeformten Stahlbauteils bekannt, bei dem das Vorprodukt auf eine Temperatur oberhalb von 60°C und unterhalb der Ac3-Umwandlungstemperatur erwärmt und anschließend in diesem Temperaturbereich umgeformt wird. Das Bauteil weist eine Mindestzugfestigkeit von 700 MPa auf bei gleichzeitig hoher Bruchdehnung, wobei das Vorprodukt folgende Legierungszusammensetzung in Gewichts- % aufweist: C: 0,0005 bis 0,9; Mn: mehr als 3,0 bis 12; Rest Eisen einschließlich unvermeidbarer stahlbegleitender Elemente, mit optionaler Zulegierung von einem oder mehreren der folgenden Elemente (in Gewichts-%): Al: bis 10; Si: bis 6; Cr: bis 6; Nb: bis 1,5; V: bis 1,5; Ti: bis 1,5; Mo: bis 3; Cu: bis 3; Sn: bis 0,5; W bis 5; Co: bis 8; Zr: bis 0,5; Ta: bis 0,5; Te: bis 0,5; B: bis 0,15; P: max. 0,1, insbesondere <0,04; S: max. 0,1, insbesondere <0,02; N: max. 0,1, insbesondere <0,05; Ca: bis 0,1.

Der Stahl weist einen TRIP/TWIP-Effekt mit einem (Rest-)Austenitanteil von 5 bis 80 % auf, mit dem eine hohe Bauteilfestigkeit bei gleichzeitig hohem Umformvermögen des Stahlblechs bei geringen Herstellkosten und hoher Ressourcenschonung erreicht wird, jedoch ist das Restumformvermögen bei einer der Warmumformung nachfolgenden Umformung bei Raumtemperatur oder bei entsprechenden Beanspruchungen des Bauteils bei Raumtemperatur noch nicht ausreichend hoch. Bedingt durch die Instabilität des (Rest-) Austenitanteils bei Raumtemperatur, besteht zudem beim Einwirken mechanischer Spannungen die Gefahr einer Versprödung durch aufgenommenen Wasserstoff und damit einer verzögerten Rissbildung (delayed fracture).

Aufgabe der Erfindung ist es daher, ein verbessertes Verfahren zur Herstellung eines Bauteils durch Warmumformung eines Vorproduktes aus manganhaltigem Stahl bei Warmumformtemperaturen unterhalb des Ac1-Umwandlungspunktes anzugeben, welches ebenfalls kostengünstig ist und bei dem ein höheres Restumformvermögen des Bauteils bei Raumtemperatur und eine deutlich verringerte Neigung zu einer verzögerten wasserstoffinduzierten Rissbildung erreicht wird. Weiterhin soll ein entsprechendes, durch Halbwarmumformung hergestelltes Bauteil angegeben werden. Auch soll ein Verfahren zur Herstellung eines Stahlbandes als Vorprodukt zum erfindungsgemäßen Warmumformen eines Stahlbauteils angegeben werden.

Ein erfindungsgemäßes Verfahren zur Herstellung eines warmumgeformten Stahlbauteils wird in den Ansprüchen 1 bis 12, ein erfindungsgemäß hergestelltes Stahlband als Vorprodukt für ein warmumgeformtes Bauteil in Anspruch 13 und ein erfindungsgemäß warmumgeformtes Bauteil in Anspruch 14 angegeben.

Nach der Lehre der Erfindung wird diese Aufgabe durch ein Verfahren zur Herstellung eines Bauteils durch Warmumformen eines Vorproduktes aus einem TRIP und/oder kombinierten TRIP/TWIP-Effekt aufweisenden Stahl gelöst, mit einem Mangangehalt von über 12 Gewichts-%, vorteilhaft mit bis zu 20 Gewichts-% und einem Austenitgehalt von mindestens 25 bis zu 90 Volumen-%, vorteilhaft mindestens 35 Volumen-%, Rest Ferrit bzw. Bainit, Martensit, angelassener Martensit oder Perlit, welches dadurch gekennzeichnet ist, dass das Vorprodukt bei einer Warmumformtemperatur oberhalb von 60°C und unterhalb der Ac1-Umwandlungstemperatur umgeformt wird und nach dem Umformen der ursprüngliche Austenitgehalt vollständig erhalten bleibt oder nach dem Umformen mindestens 10% des ursprünglichen Austenitgehalts erhalten bleibt. Hierdurch bleibt der ursprüngliche Austenitanteil entweder ganz oder zumindest teilweise erhalten. Der Einsatz des erfindungsgemäßen mehrphasigen Gefüges führt vorteilhafterweise im Vergleich zu einem vollaustenitischen Gefüge zu einer Einsparung von Legierungskosten.

Als mögliche Umformarten der erfindungsgemäßen Warmumformung können beispielsweise verschiedene Walzverfahren, Pressen, Tiefziehen oder auch die Umformung mittels Innenhochdruck eingesetzt werden. Ein Härten im Zuge der erfindungsgemäßen Warmumformung ist nicht vorgesehen und somit umfasst die erfindungsgemäße Warmumformung kein Presshärten. Im Gegensatz zum klassischen Warmumformen findet die erfindungsgemäße Warmumformung deutlich unterhalb der Rekristallisationstemperatur statt, während beim klassischen Warmumformen die Umformoperation oberhalb dieser Temperatur stattfindet.

Besonders vorteilhaft ist vorgesehen, dass nach dem Umformen mindestens 30%, vorzugsweise mindestens 50%, des ursprünglichen Austenitgehalts erhalten bleibt.

Der große Vorteil der vorliegenden Erfindung liegt darin, dass bei dem erfindungsgemäßen Stahl mit über 12 Gewichts-% Mangan, vorteilhaft mit über 15 Gewichts-% Mangan, ein sehr stabiler Austenit im Gefüge vorliegt, der vorteilhaft ganz oder zumindest teilweise nach der Umformung im Warmumformtemperaturbereich zwischen 60°C und Ac1 erhalten bleibt, welche im Folgenden als "TWIP-Umformung" bezeichnet wird. Gleichzeitig wird eine Umwandlung des Austenits in Martensit durch den TRIP-Effekt weitgehend unterdrückt. Ein vorteilhafter Austenitanteil im Vorprodukt beträgt 35 bis 90 Volumen-%, um entweder eine verbesserte Umformbarkeit bei 35 Volumen-% anstatt 25 Volumen-% oder eine höhere Festigkeit bei 90 Volumen-% Austenit anstatt bei 95 Volumen-% Austenit zu erreichen. Bei den erfindungsgemäßen Mangan-Gehalten reichen als Untergrenze 60°C aus, um den metastabilen Austenit so weit zu stabilisieren, dass keine Umwandlung per TRIP-Effekt stattfindet und stattdessen Verformungszwillinge im Austenit gebildet werden.

Durch diese "TWIP-Umformung" wird vorteilhaft sichergestellt, dass durch den hohen verbliebenen Austenitanteil, im umgeformten Bauteil auch bei nachträglicher Kaltumformung bei Raumtemperatur oder bei einer Bauteilbeanspruchung bei Raumtemperatur im betrieblichen Einsatz ein sehr hohes Restumformvermögen des Werkstoffes vorliegt. Gleichzeitig nimmt die Neigung zu wasserstoffinduzierter Rissbildung und damit zu delayed fracture ebenfalls deutlich ab.

Hierdurch werden Bauteile erhalten, die eine Mindestzugfestigkeit Rm von 700 MPa bis 2000 MPa, bevorzugt 850 bis 1800 MPa, insbesondere bevorzugt mehr als 1000 bis 1800 MPa, bei gleichzeitig hoher Bruchdehnung A80 von mehr als 3 bis 40%, bevorzugt mehr als 6% aufweisen. Damit wird ein oftmals kundenseitig gefordertes, besonders großes Produkt von Festigkeit und Bruchdehnung ermöglicht.

Die geforderten Bauteileigenschaften werden vorteilhaft dann sicher erhalten, wenn die Umformung in einem Warmumformtemperaturbereich von 60°C bis unterhalb 450°C, vorteilhaft bis unterhalb 350°C und insbesondere bis unterhalb 250°C erfolgt.

Erfindungsgemäß wird für das Vorprodukt vorteilhaft ein Stahl eingesetzt, der folgende Legierungszusammensetzung in Gewichts-% aufweist: C: 0,0005 bis 0,9, Mn: mehr als 12, Rest Eisen einschließlich unvermeidbarer stahlbegleitender Elemente, mit optionaler Zulegierung von einem oder mehreren der folgenden Elemente (in Gewichts-%): Al: bis 10, Si: bis 6, Cr: bis 6, Nb: bis 1, V: bis 1,5, Ti: bis 1,5, Mo: bis 3, Cu: bis 3, Sn: bis 0,5, W: bis 5, Co: bis 8, Zr: bis 0,5, Ta: bis 0,5, Te: bis 0,5, B: bis 0,15, P: <0,1, insbesondere <0,04, S: <0,1, insbesondere <0,02, N: <0,1, insbesondere <0,05.

Die Verwendung des Begriffs "bis" in der Definition der Gehaltsbereiche, wie beispielsweise 0,01 bis 1 Gewichts-%, bedeutet, dass die Eckwerte - im Beispiel 0,01 und 1 - miteingeschlossen sind.

Der erfindungsgemäße Stahl eignet sich insbesondere zur Herstellung komplex geformter Bauteile durch TWIP-Umformung, die neben einem sehr guten Umformvermögen während der Umformung, eine hohe Festigkeit und Bruchdehnung im Betriebszustand aufweisen und vorteilhaft mit einem zinkbasierten kathodischen Korrosionsschutz versehen werden.

In vorteilhafter Weise weist der Stahl im Ausgangszustand eine Zugfestigkeit Rₘ von > 700 bis 2000 MPa auf bei einer Bruchdehnung A80 in Abhängigkeit von der erreichten Zugfestigkeit von mindestens 3 bis 40%, bevorzugt mindestens 6% auf, wobei höhere Dehnungswerte geringeren Zugfestigkeiten zugeschrieben werden und umgekehrt.

Das erfindungsgemäße Verfahren weist gegenüber dem aus der DE 601 19 826 T2 oder der EP 2 778 247 A1 bekannten Verfahren zur Herstellung eines Bauteils mittels Presshärtung den Vorteil auf, dass bei deutlich geringerem Energiebedarf für die Erwärmung durch den Einsatz eines im Ausgangszustand mehrphasigen Stahls mit Restaustenit ein Bauteil mit mechanischen Kennwerten von Zugfestigkeit und Bruchdehnung bereitgestellt wird, die deutlich besser sind, als die mechanischen Eigenschaften der Bauteile aus bekannten Stählen für die Halbwarmumformung oder des Presshärtens. Zusätzlich werden durch niedrigere Aufheiztemperaturen im Vergleich zur Presshärtung Energiekosten eingespart.

Der mittelmanganhaltige Stahl mit einem Mangangehalt von über 12 Gewichts-%, vorteilhaft über 15 Gewichts-%, wird als Flachprodukt (Warm- oder Kaltband) oder als nahtloses oder geschweißtes Rohr als Vorprodukt, mit einer Korrosionsschutzschicht (Zn, Zn-Legierungen, anorganische oder organische Beschichtungen mit Zn, AlSi oder sonstige anorganische oder organische Beschichtungen) versehen und anschließend TWIP-umgeformt. Als TWIP-Umformung wird hierbei eine Umformung nach einer Erwärmung des Vorproduktes auf eine Warmumformtemperatur < Ac1, vorzugsweise < 450°C, bevorzugt < 350 °C, weiterhin bevorzugt < 250 °C bis 60 °C bezeichnet, bei der der Austenitanteil im Vorprodukt ganz oder teilweise während der Umformung erhalten bleibt und ein, für die chemische Zusammensetzung des Stahls möglicherweise einsetzender TRIP-Effekt ganz oder teilweise unterdrückt wird. Eine Erwärmung auf < 450 °C, bevorzugt bei < 350 °C und weiterhin bevorzugt < 250 °C, ermöglicht zudem vorteilhaft die Verwendung eines kathodischen Korrosionsschutzes auf Zinkbasis.

Das TWIP-Umformen verbessert des Weiteren die Umformeigenschaften im Vergleich zum Umformen bei RT und erhöht vorteilhaft den Widerstand gegenüber Wasserstoffversprödung und verzögerter Rissbildung. Die Abkühlung erfolgt an ruhender Luft und bedarf im Vergleich zum Presshärten also keiner beschleunigten und/oder geregelten Abkühlung, was die Herstellkosten reduziert.

Das Bauteil kann aber optional nach dem TWIP-Umformen mittels Luftstrom, Öl, Wasser oder sonstigen Wirkmedien technisch beschleunigt abgekühlt werden, falls dies aus verfahrenstechnischen Gründen erforderlich sein sollte.

Das Erwärmen des mittels TWIP-Umformung umzuformenden Materials erfolgt bevorzugt induktiv, alternativ durch Strahlung oder aber konduktiv. Optional erfolgt das Erwärmen des Materials vor dem TWIP-Umformen direkt im Umformwerkzeug, wodurch ein zusätzliches Ofenaggregat vorteilhaft eingespart und ein Prozessschritt weggelassen werden kann. Dies kommt insbesondere bei Erwärmtemperaturen von < 450 °C, vorzugsweise < 350 °C und weiterhin bevorzugt < 250 °C, in Betracht.

Die kundenseitige Forderung nach einem kathodischen Korrosionsschutz in Verbindung mit hochfesten Stählen mit geforderten Zugfestigkeiten Rm von bis zu 2000 MPa kann somit vorteilhaft durch TWIP-Umformen des erfindungsgemäßen Stahls mit mehr als 12 Gewichts-% Mangan, insbesondere mehr als 15 Gewichts-% Mangan, enthaltenden Stahls erfüllt werden.

Des Weiteren bewirkt die Erwärmtemperatur unterhalb Ac1 vorteilhaft einen nur geringen Festigkeitsabfall im Vorprodukt bei gleichzeitig verbesserten Umformeigenschaften. Bedingt wird dies durch die Stabilisierung des Austenitanteils, der im umgeformten Bauteil auch bei Raumtemperatur (RT) noch vorhanden ist. Aufgrund der fehlenden Gefügeumwandlung während der Abkühlung auf Raumtemperatur nach der TWIP-Umformung tritt vorteilhaft nur ein geringer Verzug des Bauteils auf.

Weiterhin sind Energieeinsparpotentiale und eine Reduzierung der CO₂-Emmission bei der TWIP-Umformung im Vergleich zum Presshärten bei Temperaturen oberhalb Ac1, insbesondere oberhalb Ac3 umsetzbar.

Besonders gleichmäßige und homogene Werkstoffeigenschaften können erreicht werden, wenn der Stahl des Vorproduktes folgende Legierungszusammensetzung in Gewichts-% aufweist:
C: 0,0005 bis 0,9, insbesondere 0,05 bis 0,42
Mn: >12 bis 20, insbesondere >15 bis 20

Rest Eisen einschließlich unvermeidbarer stahlbegleitender Elemente, mit optionaler Zulegierung von einem oder mehreren der folgenden Elemente (in Gewichts-%):
Al: 0 - 10, vorzugsweise 0,1 - 5, insbesondere bevorzugt > 0,5 - 3
Si: 0 - 6, vorzugsweise 0,05 - 3, insbesondere bevorzugt 0,1 - 1,5
Cr: 0 - 6, vorzugsweise 0,1 - 4, insbesondere bevorzugt > 0,5 - 2,5
Nb: 0 - 1, vorzugsweise 0,005 - 0,4, insbesondere bevorzugt 0,01 - 0,1
V: 0 - 1,5, vorzugsweise 0,005 - 0,6, insbesondere bevorzugt 0,01 - 0,3
Ti: 0 - 1,5, vorzugsweise 0,005 - 0,6, insbesondere bevorzugt 0,01 - 0,3
Mo: 0 - 3, vorzugsweise 0,005 - 1,5, insbesondere bevorzugt 0,01 - 0,4
Sn: 0 - 0,5, vorzugsweise < 0,2, insbesondere bevorzugt < 0,05
Cu: 0 - 3, vorzugsweise < 0,5, insbesondere bevorzugt < 0,1
W: 0 - 5, vorzugsweise 0,01 - 3, insbesondere bevorzugt 0,1 - 1,5
Co: 0 - 8, vorzugsweise 0,01 - 5, insbesondere bevorzugt 0,1 - 2
Zr: 0 - 0,5, vorzugsweise 0,005 - 0,3, insbesondere bevorzugt 0,01 - 0,2
Ta: 0 - 0,5, vorzugsweise 0,005 - 0,3, insbesondere bevorzugt 0,01 - 0,1
Te: 0 - 0,5, vorzugsweise 0,005 - 0,3, insbesondere bevorzugt 0,01 - 0,1
B: 0 - 0,15, vorzugsweise 0,001 - 0,08, insbesondere bevorzugt 0,002 - 0,01
P: < 0,1, vorzugsweise < 0,04
S: < 0,1, vorzugsweise < 0,02
N: < 0,1, vorzugsweise < 0,05

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung und Wechselwirkung hängt im Allgemeinen stark von der Menge, der Anwesenheit weiterer Legierungselemente und dem Lösungszustand im Werkstoff ab. Die Zusammenhänge sind vielseitig und komplex. Im Folgenden soll auf die Wirkung der Legierungselemente in der erfindungsgemäßen Legierung näher eingegangen werden. Nachfolgend werden die positiven Effekte der erfindungsgemäß verwendeten Legierungselemente beschrieben:
Kohlenstoff C: Wird benötigt zur Bildung von Karbiden, stabilisiert den Austenit und erhöht die Festigkeit. Höhere Gehalte an C verschlechtern die Schweißeigenschaften und führen zur Verschlechterung der Dehnungs- und Zähigkeitseigenschaften, weshalb ein maximaler Gehalt von 0,9 Gewichts-% festgelegt wird. Der Mindestgehalt wird mit 0,0005 Gewichts-% festgelegt. Vorzugsweise wird ein Gehalt von 0,05 bis 0,42 Gewichts-% festgelegt, da in diesem Bereich das Verhältnis von Restaustenit zu anderen Phasenanteilen besonders vorteilhaft eingestellt werden kann.

Mangan Mn: Stabilisiert den Austenit, erhöht die Festigkeit und die Zähigkeit und ermöglicht eine verformungsinduzierte Martensit- und/oder Zwillingsbildung in der erfindungsgemäßen Legierung. Gehalte kleiner gleich 12 Gewichts-% sind nicht ausreichend zur Stabilisierung des Austenits und verschlechtern somit die Dehnungseigenschaften, während bei Gehalten von über 20 Gewichts-% und mehr der Austenit zu stark stabilisiert wird und dadurch die Festigkeitseigenschaften, insbesondere die Streckgrenze, verringert werden. Für den erfindungsgemäßen Manganstahl mit höheren Mangangehalten wird ein Bereich von über 12, vorteilhaft über 15 bis 20 Gewichts-% bevorzugt, da in diesem Bereich das Verhältnis der Phasenanteile zueinander und die Umwandlungsmechanismen während der TWIP- und Kaltumformung vorteilhaft beeinflusst werden können.

Aluminium AI: Verbessert die Festigkeits- und Dehnungseigenschaften, senkt die spezifische Dichte und beeinflusst das Umwandlungsverhalten der erfindungsgemäßen Legierung. Gehalte an Al von mehr als 10 Gewichts-% verschlechtern die Dehnungseigenschaften und bewirken ein überwiegend sprödes Bruchverhalten. Für den erfindungsgemäßen Manganstahl mit mittleren Mangangehalten wird ein Al-Gehalt von 0,1 bis 5 Gewicht-% bevorzugt, um die Festigkeit bei gleichzeitig guter Dehnung zu erhöhen. Insbesondere Gehalte von > 0,5 bis 3 Gewichts-% ermöglichen ein besonders großes Produkt von Festigkeit und Bruchdehnung.

Silizium Si: Behindert die Kohlenstoffdiffusion, verringert die spezifische Dichte und erhöht und verbessert die Festigkeit und die Dehnungs- sowie Zähigkeitseigenschaften. Gehalte von mehr als 6 Gewichts-% verhindern eine Weiterverarbeitung durch Kaltwalzen aufgrund einer Versprödung des Werkstoffs. Daher wird ein maximaler Gehalt von 6 Gewichts-% festgelegt. Optional wird ein Gehalt von 0,05 bis 3 Gewichts-% festgelegt, da Gehalte in diesem Bereich die Umformeigenschaften positiv beeinflussen. Als besonders vorteilhaft für die Umform- und Umwandlungseigenschaften haben sich Si-Gehalte von 0,1 bis 1,5 Gewichts-% herausgestellt.

Chrom Cr: Verbessert die Festigkeit und verringert die Korrosionsrate, verzögert die Ferrit- und Perlitbildung und bildet Karbide. Der maximale Gehalt wird mit 6 Gewichts-% festgelegt, da höhere Gehalte eine Verschlechterung der Dehnungseigenschaften und wesentlich höhere Kosten zur Folge haben. Für den erfindungsgemäßen Manganstahl mit mittleren Mangangehalten wird ein Cr-Gehalt von 0,1 bis 4 Gewicht-% bevorzugt, um die Ausscheidung grober Cr-Karbide zu vermindern. Insbesondere Gehalte von > 0,5 bis 2,5 Gewichts-% haben sich als vorteilhaft für die Stabilisierung des Austenits und die Ausscheidung feiner Cr-Karbide erwiesen.

Molybdän Mo: Wirkt als Karbidbildner, erhöht die Festigkeit und den Widerstand gegenüber verzögerter Rissbildung und Wasserstoffversprödung. Gehalte an Mo von über 3 Gewichts-% verschlechtern die Dehnungseigenschaften, weshalb ein Maximalgehalt von 3 Gewichts-% festgelegt wird. Für den erfindungsgemäßen Manganstahl mit mittleren Mangangehalten wird ein Mo-Gehalt von 0,005 bis 1,5 Gewicht-% bevorzugt, um die Ausscheidung zu großer Mo-Karbide zu vermeiden. Insbesondere Gehalte von 0,01 Gewichts-% bis 0,4 Gewichts-% bewirken die Ausscheidung gewünschter Mo-Karbide bei gleichzeitig verringerten Legierungskosten.

Phosphor P: Ist ein Spurenelement aus dem Eisenerz und wird im Eisengitter als Substitutionsatom gelöst. Phosphor steigert durch Mischkristallverfestigung die Härte und verbessert die Härtbarkeit. Es wird allerdings in der Regel angestrebt, den Phosphorgehalt soweit wie möglich abzusenken, da er unter anderem durch seine geringe Diffusionsgeschwindigkeit stark seigerungsanfällig ist und in hohem Maße die Zähigkeit vermindert. Durch die Anlagerung von Phosphor an den Korngrenzen können Risse entlang der Korngrenzen beim Warmwalzen auftreten. Zudem setzt Phosphor die Übergangstemperatur von zähem zu sprödem Verhalten um bis zu 300 °C herauf. Aus vorgenannten Gründen ist der Phosphorgehalt auf unter 0,1 Gewichts-% begrenzt, wobei Gehalte von < 0,04 Gewichts-% aus oben genannten Gründen vorteilhaft angestrebt werden.

Schwefel S: Ist wie Phosphor als Spurenelement im Eisenerz gebunden. Er ist im Stahl im Allgemeinen unerwünscht, da er zu starker Seigerung neigt und stark versprödend wirkt, wodurch die Dehnungs- und Zähigkeitseigenschaften verschlechtert werden. Es wird daher versucht, möglichst geringe Mengen an Schwefel in der Schmelze zu erreichen. Aus vorgenannten Gründen ist der Schwefelgehalt auf unter 0,1 Gewichts-% begrenzt. Insbesondere vorteilhaft ist die Begrenzung des S-Gehalts auf < 0,02 Gewichts-%, um die Ausscheidung von MnS zu vermindern.

Stickstoff N: N ist ebenfalls ein Begleitelement aus der Stahlherstellung. Er verbessert im gelösten Zustand bei höher manganhaltigen Stählen mit größer gleich 4% Gewichts-% Mn die Festigkeits- und Zähigkeitseigenschaften. Niedriger Mn-legierte Stähle < 4 Gewichts-% mit freiem Stickstoff neigen zu einem starken Alterungseffekt. Der Stickstoff diffundiert schon bei geringen Temperaturen an Versetzungen und blockiert diese. Er bewirkt damit einen Festigkeitsanstieg verbunden mit einem rapiden Zähigkeitsverlust. Ein Abbinden des Stickstoffes in Form von Nitriden ist beispielsweise durch Zulegieren von Aluminium, Vanadium, Niob oder Titan möglich. Aus vorgenannten Gründen ist der Stickstoffgehalt auf unter 0,1 Gewichts-% begrenzt, wobei Gehalte von < 0,05 Gewichts-% zur weitestgehenden Vermeidung der Bildung von AIN bevorzugt angestrebt werden.

Mikrolegierungselemente werden in der Regel nur in sehr geringen Mengen zugegeben. Sie wirken im Gegensatz zu den Legierungselementen hauptsächlich durch Ausscheidungsbildung können aber auch in gelöstem Zustand die Eigenschaften beeinflussen. Trotz der geringen Mengenzugaben beeinflussen Mikrolegierungselemente die Herstellungsbedingungen sowie die Verarbeitungs- und Endeigenschaften stark.

Typische Mikrolegierungselemente sind Vanadium, Niob und Titan. Diese Elemente können im Eisengitter gelöst werden und bilden mit Kohlenstoff und Stickstoff Carbide, Nitride und Carbonitride.

Vanadium V und Niob Nb: Diese wirken insbesondere durch die Bildung von Karbiden kornfeinend, wodurch gleichzeitig die Festigkeit, Zähigkeit und Dehnungseigenschaften verbessert werden. Gehalte von über 1,0 Gewichts-% bei Nb und über 1,5 Gewichts-% bei V bringen keine weiteren Vorteile. Für Vanadium und Niob wird optional bevorzugt ein Mindestgehalt von größer gleich 0,005 Gewichts-% und ein Maximalgehalt von 0,4 Gewichts-% für Nb und 0,6 Gewichts-% für V vorgesehen, in welchem die Legierungselemente vorteilhaft eine Kornfeinung bewirken. Zur Verbesserung der Wirtschaftlichkeit bei gleichzeitig optimaler Kornfeinung können die Gehalte an V weiterhin auf 0,01 Gewichts-% bis 0,3 Gewichts-% und die Gehalte an Nb auf 0,01 bis 0,1 Gewichts-% eingeschränkt werden.

Tantal Ta: Tantal wirkt ähnlich wie Niob als Karbidbildner kornfeinend und verbessert dadurch gleichzeitig die Festigkeit, Zähigkeit und Dehnungseigenschaften. Gehalte von über 0,5 Gewichts-% bewirken keine weitere Verbesserung der Eigenschaften. Daher wird optional ein Maximalgehalt von 0,5 Gewichts-% festgelegt. Bevorzugt werden ein Minimalgehalt von 0,005 und ein Maximalgehalt von 0,3 Gewichts-% festgelegt, in welchem die Kornfeinung vorteilhaft bewirkt werden kann. Zur Verbesserung der Wirtschaftlichkeit und Optimierung der Kornfeinung wird insbesondere bevorzugt ein Gehalt von 0,01 Gewichts-% bis 0,1 Gewichts-% angestrebt.

Titan Ti: Wirkt als Karbidbildner kornfeinend, wodurch gleichzeitig die Festigkeit, Zähigkeit und Dehnungseigenschaften verbessert werden und vermindert die interkristalline Korrosion. Gehalte an Ti von über 1,5 Gewichts-% verschlechtern die Dehnungseigenschaften, weshalb ein Maximagehalt an Ti von 1,5 Gewichts-% festgelegt wird. Optional wird ein Mindestgehalt von 0,005 und ein Maximalgehalt von 0,6 Gewichts-% festgelegt, in welchem Ti vorteilhaft ausgeschieden wird. Bevorzugt wird ein Minimalgehalt von 0,01 Gewichts-% und ein Maximalgehalt von 0,3 Gewichts-% vorgesehen, welche ein optimales Ausscheidungsverhalten bei geringen Legierungskosten gewährleisten.

Zinn Sn: Zinn steigert die Festigkeit, reichert sich jedoch ähnlich wie Kupfer bei höheren Temperaturen in oder unter der Zunderschicht und dann an den Korngrenzen an. Es führt durch Eindringen in die Korngrenzen zur Bildung niedrig schmelzender Phasen und damit verbunden zu Rissen im Gefüge und zu Lotbrüchigkeit, weshalb optional ein Maximalgehalt von kleiner gleich 0,5 Gewichts-% vorgesehen wird. Bevorzugt werden aus oben genannten Gründen Gehalte kleiner 0,2 Gewichts-% eingestellt. Insbesondere vorteilhaft zur Vermeidung niedrig schmelzender Phasen und Rissen im Gefüge werden Gehalte von < 0,05 Gewichts-% bevorzugt.

Kupfer Cu: Verringert die Korrosionsrate und steigert die Festigkeit. Gehalte von 3 Gewichts-% und mehr verschlechtern die Herstellbarkeit durch Bildung niedrig schmelzender Phasen beim Vergießen und Warmwalzen weshalb ein Maximalgehalt von 3 Gewichts-% festgelegt wird. Optional wird ein Maximalgehalt von kleiner 0,5 Gewichts-% festgelegt, bei welchem das Auftreten von Rissen beim Gießen und Warmwalzen vorteilhaft verhindert werden kann. Als insbesondere vorteilhaft zur Vermeidung niedrig schmelzender Phasen und zur Vermeidung von Rissen haben sich Cu-Gehalte von < 0,1 Gewichts-% herausgestellt.

Wolfram W: Wirkt als Karbidbildner und erhöht die Festigkeit und Warmfestigkeit. Gehalte an W von über 5 Gewichts-% verschlechtern die Dehnungseigenschaften, weshalb ein Maximalgehalt von 5 Gewichts-% W festgelegt wird. Optional wird ein Maximalgehalt von 3 Gewichts-% und ein Minimalgehalt von 0,01 Gewichts-% festgelegt, in welchem vorteilhaft die Ausscheidung von Karbiden stattfindet. Insbesondere bevorzugt wird ein Minimalgehalt von 0,1 Gewichts-% und ein Maximalgehalt von 1,5 Gewichts-% vorgesehen, welcher ein optimales Ausscheidungsverhalten bei niedrigen Legierungskosten ermöglicht.

Kobalt Co: Erhöht die Festigkeit des Stahls, stabilisiert den Austenit und verbessert die Warmfestigkeit. Gehalte von über 8 Gewichts-% verschlechtern die Dehnungseigenschaften, weshalb ein Maximalgehalt von 8 Gewichts-% festgelegt wird. Optional wird ein Maximalgehalt von kleiner gleich 5 Gewichts-% und ein Minimalgehalt von 0,01 Gewichts-% festgelegt, welche die Festigkeit und Warmfestigkeit vorteilhaft verbessern. Bevorzugt wird ein Minimalgehalt von 0,1 Gewichts-% und ein Maximalgehalt von 2 Gewichts-% vorgesehen, welcher neben den Festigkeitseigenschaften die Austenitstabilität vorteilhaft beeinflusst.

Zirkonium Zr: Wirkt als Karbidbildner und verbessert die Festigkeit. Gehalte an Zr von über 0,5 Gewichts-% verschlechtern die Dehnungseigenschaften, weshalb ein Maximalgehalt von 0,5 Gewichts-% festgelegt wird. Optional wird ein Maximalgehalt von 0,3 Gewichts-% und ein Minimalgehalt von 0,005 Gewichts-% festgelegt, in welchem vorteilhaft Karbide ausgeschieden werden. Bevorzugt wird ein Minimalgehalt von 0,01 Gewichts-% und ein Maximalgehalt von 0,2 Gewichts-% vorgesehen, welche vorteilhaft eine optimale Karbidausscheidung bei niedrigen Legierungskosten ermöglichen.

Bor B: Verzögert die Austenitumwandlung, verbessert die Warmumformeigenschaften von Stählen und erhöht die Festigkeit bei Raumtemperatur. Es entfaltet seine Wirkung bereits bei sehr geringen Legierungsgehalten. Gehalte oberhalb 0,15 Gewichts-% verschlechtern die Dehnungs- und Zähigkeitseigenschaften stark, weshalb der Maximalgehalt auf 0,15 Gewichts-% festgelegt wird. Optional wird ein Minimalgehalt von 0,001 Gewichts-% und ein Maximalgehalt von 0,08 Gewichts-% festgelegt, in welchem die festigkeitssteigernde Wirkung von Bor vorteilhaft genutzt wird. Weiterhin wird ein Minimalgehalt von 0,002 Gewichts-% und ein Maximalgehalt von 0,01 Gewichts-% bevorzugt, welche eine optimale Nutzung zur Festigkeitssteigerung bei gleichzeitiger Verbesserung des Umwandlungsverhaltens ermöglichen.

Tellur Te: Verbessert die Korrosionsbeständigkeit und die mechanischen Eigenschaften sowie die Bearbeitbarkeit. Des Weiteren erhöht Te die Festigkeit von MnS, welches dadurch beim Warm- und Kaltwalzen weniger stark in Walzrichtung gelängt wird. Gehalte oberhalb 0,5 Gewichts-% verschlechtern die Dehnungs- und Zähigkeitseigenschaften, weshalb ein Maximalgehalt von 0,5 Gewichts-% festgelegt wird. Optional wird ein Minimalgehalt von 0,005 Gewichts-% und ein Maximalgehalt von 0,3 Gewichts-% festgelegt, welche mechanischen Eigenschaften vorteilhaft verbessern und die Festigkeit vorhandener MnS erhöhen. Weiterhin wird ein Minimalgehalt von 0,01 Gewichts-% und ein Maximalgehalt von 0,1 Gewichts-% bevorzugt, welche eine Optimierung der mechanischen Eigenschaften bei gleichzeitiger Reduktion der Legierungskosten ermöglichen.

Typische Anwendungen erfindungsgemäß warmumgeformter Bauteile, hergestellt aus Blechen oder Rohren als Vorprodukte, sind insbesondere der Automobilbau aber beispielsweise auch der Mobilkranbau sowie Längs- und Querträger in Lastwagen und Anhängern oder Sicherheits- und Fahrwerksteile im Pkw sowie der Waggonbau.

Als Vorprodukt kann beispielsweise eine Blechplatine oder ein Rohr verwendet werden. Die Blechplatine kann aus Warmband oder Kaltband gefertigt sein, und das Rohr kann ein nahtlos warmgewalztes oder ein aus Warm- oder Kaltband hergestelltes geschweißtes Rohr sein.

Das warmgewalzte oder geschweißte Rohr kann nach der Herstellung nochmals mit einem oder mehrfachen Zieh- und/oder Glühprozessen oder in einem Aufweiteprozess hydraulisch, zum Beispiel mittels Innenhochdruckumformung (IHU) oder mittels eines Ziehrings oder Walzen (Pilgern) oder Strangpressen erfindungsgemäß mittels TWIP-Umformung umgeformt werden.

Zudem ist es erfindungsgemäß vorteilhaft möglich, die einzelnen Umformschritte mit unterschiedlichen Geschwindigkeiten und bei unterschiedlichen Temperaturen innerhalb des erfindungsgemäßen Temperaturbereichs durchzuführen. Ebenfalls ist ein letzter Umformschritt außerhalb des genannten Temperaturbereichs für die TWIP-Umformung zur Erhöhung der Festigkeit des Endprodukts auf Kosten der Restdehnung möglich. So ist es beispielsweise möglich, die martensitische Umwandlung in den ersten Schritten zur Verbesserung der Umformeigenschaften und Erleichterung der weiteren Umformung vorteilhaft zu verhindern und im letzten Umformschritt einen Temperaturbereich beispielsweise unterhalb 60 °C bis -196°C zu wählen, welcher eine zumindest teilmartensitische Umwandlung des Gefüges mit dem Ziel der Festigkeitssteigerung ermöglicht. Des Weiteren ist es vorteilhaft möglich, mehrere Umformvorgänge mit weniger Zwischenerwärmungen und somit in einem erweiterten Temperaturbereich durchzuführen, wodurch die Anzahl der Zwischenerwärmungen vorteilhaft reduziert werden kann. Unterschiedliche Umformgeschwindigkeiten ermöglichen analog eine gezielte Beeinflussung der martensitischen Umwandlung und der Spannungsverteilung im Bauteil.

Des Weiteren kann erfindungsgemäß vorteilhaft auch ein mehrstufiges Verfahren durchgeführt werden, bei dem sich dem TWIP-Umformprozess eine abschließende Kaltumformung (bspw. Walzen, Pressen, Tiefziehen, inkrementelles Umformen) anschließt, wodurch ein insgesamt höheres Umformvermögen im Vergleich zum alleinigen Kaltumformen realisiert werden kann.

Das Vorprodukt und das daraus hergestellte Bauteil zeichnen sich durch eine sehr hohe Zugfestigkeit bei einer ausreichend hohen Dehnung aus. Aufgrund der chemischen Zusammensetzung ist zudem eine gute Schweißbarkeit gegeben.

Das Vorprodukt kann weiterhin in bekannter Weise mit einer zunder- bzw. korrosionshemmenden Schicht auf Lackbasis oder mit einem metallischen Überzug versehen sein. Der metallische Überzug kann Zink und/oder Magnesium und/oder Aluminium und/oder Silizium enthalten. Vorzugsweise besteht der metallische Überzug aus ZnMg, ZnAl, ZnNi, ZnFe, ZnCo, ZnAlCe oder ZnMn. Ein Rohr als Vorprodukt kann dabei sowohl auf der Innen- als auch auf der Außenseite beschichtet sein.

Im Gegensatz zu gängigen Fertigungsrouten kann bereits oberflächenveredeltes Warm- oder Kaltband oder Rohr für die Umformung im Anschluss an eine Erwärmung eingesetzt werden, da die Haftung und die Duktilität eine TWIP-Umformung erträgt. Der metallische Überzug ist gegen kurzzeitige Wiedererwärmungen der Kombination Substrat/Beschichtung (Stahlband/Beschichtung) unterhalb der Ac1-Temperatur des Substrats resistent, um die Wiedererwärmung vor der TWIP-Umformung und die eigentliche TWIP-Umformung zu überstehen.

Aufgrund der vergleichsweise geringen Wärmemenge kann auf großräumige Wiedererwärmungsaggregate, wie z. B. auf Tunnelöfen oder Kammeröfen, zugunsten schnell und direkt wirkender Systeme (induktiv, konduktiv, direkt im Werkzeug und insbesondere Strahlung) verzichtet werden. Dabei kann die Erwärmung großflächig, bis hin zur gesamten Oberfläche der Platine oder des Rohres, oder nur lokal begrenzt auf das umzuformende Vorprodukt einwirken.

Außerdem wird für das beschriebene neue Verfahren erheblich weniger Wärmeenergie benötigt, bzw. der energetische Wirkungsgrad ist höher als beim Warmumformen mit Temperaturen über Ac1 bzw. über Ac3. Dadurch sind die Prozesskosten geringer und der CO₂ Ausstoß wird reduziert. Im Gegensatz zu presshärtbaren Stählen kann je nach Anwendungsfall auf eine technische beschleunigte Abkühlung im Werkzeug vorteilhaft verzichtet werden, wodurch sich der Durchsatz an Halbzeugen pro Umformwerkzeug deutlich erhöht. Eine aus verfahrenstechnischen Gründen eventuell notwendige technisch beschleunigte Abkühlung kann außerhalb des Werkzeugs erfolgen.

Bevorzugt erfolgt die Wiedererwärmung vor dem TWIP-Umformen mittels Induktion, da hier der energetische Wirkungsgrad hoch und die Erwärmdauer kurz ist. Des Weiteren kann vorteilhaft eine Erwärmung mittels Strahlung erfolgen, da hierbei analog der Wirkungsgrad deutlich höher ist als bei einer Erwärmung in einem Ofen oder bei konduktiver oder induktiver Erwärmung und der Energieeintrag in das Material je nach Oberflächenbeschaffenheit schneller und effektiver erfolgt.

Der Werkstoff und das Verfahren "TWIP-Umformen" sind auch sehr gut für eine partielle Erwärmung geeignet. Durch den Einsatz von z. B. Strahlern können gezielt einzelne Bereiche des umzuformenden Vorprodukts erwärmt werden, um umformbarkeitsoptimierte Zonen zu erhalten und die Festigkeit lokal durch den Anteil des durch den TRIP-Effekt umgewandelten Martensits einzustellen. Dies ermöglicht vorteilhaft die Nutzung von konventionellen Pressen zur Kaltumformung, so dass auf eine komplexe Warmumformanlage, wie sie beim Presshärten notwendig ist, verzichtet werden kann.

Ein Stahlband für ein Vorprodukt zur Herstellung eines erfindungsgemäß warmumgeformten Bauteils, kann aus dem erfindungsgemäßen Stahl gemäß folgender Verfahrensschritte hergestellt werden:
- Erschmelzen einer Stahlschmelze enthaltend (in Gewichts-%): C: 0,0005 bis 0,9, vorzugsweise 0,05 bis 0,42, Mn: mehr als 12, vorzugsweise mehr als 15, Rest Eisen einschließlich unvermeidbarer stahlbegleitender Elemente, mit optionaler Zulegierung von einem oder mehreren der folgenden Elemente (in Gewichts-%):
   Al: bis 10, Si: bis 6, Cr: bis 6, Nb: bis 1,0, V: bis 1,5, Ti: bis 1,5, Mo: bis 3, Cu: bis 3, Sn: bis 0,5, W: bis 5, Co: bis 8, Zr: bis 0,5, Ta: bis 0,5, Te: bis 0,5, B: bis 0,15, P: max. 0,1, S: max. 0,1, N: max. 0,1, Ca bis 0,1.
- Vergießen der Stahlschmelze zu einem Vorband mittels eines endabmessungsnahen horizontalen oder vertikalen Bandgießverfahrens oder Vergießen der Stahlschmelze zu einer Bramme oder Dünnbramme mittels eines horizontalen oder vertikalen Brammen- oder Dünnbrammengießverfahrens,
- Wiedererwärmen der Bramme oder Dünnbramme auf 1050 °C bis 1250 °C und anschließendes Warmwalzen der Bramme oder Dünnbramme zu einem Warmband oder Grobblech oder Wiedererwärmen des endabmessungsnah erzeugten Vorbandes, insbesondere mit einer Dicke größer als 3 mm, auf 1000 °C bis 1200 °C und anschließendes Warmwalzen des Vorbandes zu einem Warmband oder Grobblech oder Warmwalzen des Vorbandes ohne Wiedererwärmen aus der Gießhitze zu einem Warmband oder Grobblech mit optionalem Zwischenerwärmen zwischen einzelnen Walzstichen des Warmwalzens,
- Aufhaspeln des Warmbandes und optional des Grobblechs bei einer Haspeltemperatur zwischen 780 °C und Raumtemperatur,
- Optionales Glühen des Warmbandes oder Grobblechs mit folgenden Parametern:
   Glühtemperatur: 450 bis 900 °C, Glühdauer: 1 Minute bis 48 Stunden,
- Optionales Kaltwalzen oder des endabmessungsnah erzeugten Vorbandes mit einer Dicke von kleiner 5 mm zu Kaltband, oder optionales TWIP-Walzen bei einer Warmumformtemperatur von 60°C und unterhalb der Ac1-Umwandlungstemperatur des Warmbandes und anschließender Abkühlung auf Raumtemperatur
- Optionales Glühen des Kaltbandes mit folgenden Parametern:
   Glühtemperatur: 450 bis 900 °C, Glühdauer: 1 Minute bis 48 Stunden.

Es ergibt sich ein Stahlflachprodukt mit einer guten Kombination von Festigkeits-, Dehnungs- und Umformeigenschaften, sowie einem erhöhten Widerstand gegenüber verzögerter Rissbildung und Wasserstoffversprödung, welches aufgrund seines hohen (Rest-)Austenitgehalts im Gefüge bei mechanischer Beanspruchung bei Raumtemperatur eine "TWIP-Umformung" realisiert und damit einen TRIP- Effekt weitgehend unterdrückt und somit ein sehr hohes Restumformvermögen am Halbzeug oder am Bauteil bei Raumtemperatur aufweist.

## Patentansprüche

1. Verfahren zur Herstellung eines Bauteils durch Warmumformen eines Vorproduktes aus einem einen TRIP und/oder TRIP/TWIP-Effekt aufweisenden Stahl, mit einem Mangangehalt von über 12 Gewichts-%, vorteilhaft mit bis zu 20 Gewichts-% und einem Austenitgehalt von mindestens 25 bis zu 90 Volumen-%, vorteilhaft mindestens 35 Volumen-%, Rest Ferrit bzw. Bainit, Martensit, angelassener Martensit oder Perlit, **dadurch gekennzeichnet, dass** das Vorprodukt bei einer Warmumformtemperatur oberhalb von 60°C und unterhalb der Ac1-Umwandlungstemperatur umgeformt wird und nach dem Umformen der ursprüngliche Austenitgehalt vollständig erhalten bleibt oder nach dem Umformen mindestens 10% des ursprünglichen Austenitgehalts erhalten bleibt.

2. Verfahren nach Anspruch 1, **dadurch gekennzeichnet, dass** nach dem Umformen mindestens 30%, vorzugsweise mindestens 50%, des ursprünglichen Austenitgehalts erhalten bleibt.

3. Verfahren nach Anspruch 1 oder 2, **dadurch gekennzeichnet, dass** das Vorprodukt auf eine Warmumformtemperatur oberhalb von 60°C und unterhalb 450°C, bevorzugt unterhalb von 350 °C, besonders bevorzugt unterhalb von 250 °C erwärmt und anschließend in diesem Temperaturbereich umgeformt wird.

4. Verfahren nach mindestens einem der Ansprüche 1 bis 3, **dadurch gekennzeichnet, dass** die Erwärmung des Vorproduktes auf Warmumformtemperatur nur partiell erfolgt.

5. Verfahren nach mindestens einem der Ansprüche 1 bis 4, wobei das Vorprodukt folgende Legierungszusammensetzung in Gewichts-% aufweist:
C: 0,0005 bis 0,9, insbesondere 0,05 bis 0,42
Mn: mehr als 12, insbesondere > 12 bis 20 und besonders > 15 bis 20
Rest Eisen einschließlich unvermeidbarer stahlbegleitender Elemente, mit optionaler Zulegierung von einem oder mehreren der folgenden Elemente (in Gewichts-%):
Al: bis 10, insbesondere 0,1 bis 5 und besonders > 0,5 bis 3
Si: bis 6, insbesondere 0,05 bis 3 und besonders 0,1 bis 1,5
Cr: bis 6, insbesondere 0,1 bis 4 und besonders > 0,5 bis 2,5
Nb: bis 1, insbesondere 0,005 bis 0,4 und besonders 0,01 bis 0,1
V: bis 1,5, insbesondere 0,005 bis 0,6 und besonders 0,01 bis 0,3
Ti: bis 1,5, insbesondere 0,005 bis 0,6 und besonders 0,01 bis 0,3
Mo: bis 3, insbesondere 0,005 bis 1,5 und besonders 0,01 bis 0,4
Cu: bis 3, insbesondere < 0,5 und besonders < 0,1
Sn: bis 0,5, insbesondere < 0,2 und besonders < 0,05
W bis 5, insbesondere 0,01 bis 3 und besonders 0,1 bis 1,5
Co: bis 8, insbesondere 0,01 bis 5 und besonders 0,1 bis 2
Zr: bis 0,5, insbesondere 0,005 bis 0,3 und besonders 0,01 bis 0,2
Ta: bis 0,5, insbesondere 0,005 bis 0,3 und besonders 0,01 bis 0,1
Te: bis 0,5, insbesondere 0,005 bis 0,3 und besonders 0,01 bis 0,1
B: bis 0,15, insbesondere 0,001 bis 0,08 und besonders 0,002 bis 0,01
P: <0,1, insbesondere <0,04
S: <0,1, insbesondere <0,02
N: <0,1, insbesondere <0,05

6. Verfahren nach mindestens einem der Ansprüche 1 bis 5, **dadurch gekennzeichnet, dass** das Vorprodukt vor der Erwärmung mit einem metallischen oder lackartigen Überzug versehen wird.

7. Verfahren nach Anspruch 6, **dadurch gekennzeichnet, dass** der metallische Überzug Zn und/oder Mg und/oder Al und/oder Si enthält, insbesondere dass der metallische Überzug aus ZnMg, ZnAl, ZnNi, ZnFe, ZnCo, ZnAlCe oder ZnMn besteht.

8. Verfahren nach mindestens einem der Ansprüche 1 bis 7, **dadurch gekennzeichnet, dass** die Erwärmung auf Warmumformtemperatur induktiv, konduktiv, mittels Strahlung oder durch Wärmeleitung im Umformwerkzeug erfolgt und die Abkühlung nach der Umformung an Luft oder technisch beschleunigt mittels bewegter Gase, Luft oder flüssiger Medien im oder außerhalb des Umformwerkzeugs durchgeführt wird.

9. Verfahren nach mindestens einem der Ansprüche 1 bis 8, **dadurch gekennzeichnet, dass** als Vorprodukt eine Blechplatine, die insbesondere aus Warmband oder Kaltband besteht, oder ein Rohr verwendet wird.

10. Verfahren nach Anspruch 9, **dadurch gekennzeichnet, dass** das Rohr ein nahtlos warmgewalztes oder ein aus Warm- oder Kaltband hergestelltes geschweißtes Rohr ist, welches wahlweise eine Innen- und/oder Außenbeschichtung aufweist oder optional im Zuge der Warmumformung einem oder mehrfachen Zieh- und/oder Glühprozessen unterzogen wird.

11. Verfahren nach mindestens einem der Ansprüche 1 bis 10, **dadurch gekennzeichnet, dass** das Bauteil nach der Warmumformung einer abschließenden Kaltumformung unterzogen wird.

12. Verfahren nach Anspruch 11, **dadurch gekennzeichnet, dass** die Kaltumformung bei einer Temperatur von bis zu -196°C durchgeführt wird.

13. Verfahren zur Herstellung eines Stahlbandes zur Herstellung eines Bauteils durch Warmumformen nach mindestens einem der Ansprüche 1 bis 12, **gekennzeichnet durch**:
- Erschmelzen einer Stahlschmelze enthaltend (in Gewichts-%): C: 0,0005 bis 0,9 Mn: mehr als 12, vorzugsweise mehr als 15, Rest Eisen einschließlich unvermeidbarer stahlbegleitender Elemente, mit optionaler Zulegierung von einem oder mehreren der folgenden Elemente (in Gewichts-%):
Al: bis 10, Si: bis 6, Cr: bis 6, Nb: bis 1,0, V: bis 1,5, Ti: bis 1,5, Mo: bis 3, Cu: bis 3, Sn: bis 0,5, W: bis 5, Co: bis 8, Zr: bis 0,5, Ta: bis 0,5, Te: bis 0,5, B: bis 0,15, P: max. 0,1, S: max. 0,1, N: max. 0,1, Ca bis 0,1.
- Vergießen der Stahlschmelze zu einem Vorband mittels eines endabmessungsnahen horizontalen oder vertikalen Bandgießverfahrens oder Vergießen der Stahlschmelze zu einer Bramme oder Dünnbramme mittels eines horizontalen oder vertikalen Brammen- oder Dünnbrammengießverfahrens,
- Wiedererwärmen der Bramme oder Dünnbramme auf 1050 °C bis 1250 °C und anschließendes Warmwalzen der Bramme oder Dünnbramme zu einem Warmband oder Grobblech oder Wiedererwärmen des endabmessungsnah erzeugten Vorbandes, insbesondere mit einer Dicke größer als 3 mm, auf 1000 °C bis 1200 °C und anschließendes Warmwalzen des Vorbandes zu einem Warmband oder Grobblech oder Warmwalzen des Vorbandes ohne Wiedererwärmen aus der Gießhitze zu einem Warmband oder Grobblech mit optionalem Zwischenerwärmen zwischen einzelnen Walzstichen des Warmwalzens,
- Aufhaspeln des Warmbandes und optional des Grobblechs bei einer Haspeltemperatur zwischen 780 °C und Raumtemperatur,
- Optionales Glühen des Warmbandes oder Grobblechs mit folgenden Parametern:
Glühtemperatur: 450 bis 900 °C, Glühdauer: 1 Minute bis 48 Stunden,
- Optionales Kaltwalzen des endabmessungsnah erzeugten Vorbandes mit einer Dicke von kleiner 5 mm zu Kaltband oder optionales TWIP-Walzen bei einer Warmumformtemperatur von 60°C und unterhalb der Ac1-Umwandlungstemperatur des Warmbandes und anschließender Abkühlung auf Raumtemperatur
- Optionales Glühen des Kaltbandes mit folgenden Parametern:
Glühtemperatur: 450 bis 900 °C, Glühdauer: 1 Minute bis 48 Stunden.

14. Warmumgeformtes Bauteil, hergestellt nach mindestens einem der Ansprüche 1 bis 12, aufweisend eine Mindestzugfestigkeit Rm von 700 MPa bis 2000 MPa, bevorzugt 850 bis 1800 MPa, insbesondere bevorzugt mehr als 1000 bis 1800 MPa, bei gleichzeitig hoher Bruchdehnung A80 von mehr als 3 bis 40%, bevorzugt mehr als 6%.

15. Warmumgeformtes Bauteil nach Anspruch 14 zur Verwendung in der Automobil- und Nutzfahrzeugindustrie, im Maschinenbau, im Bauwesen oder zur Herstellung weißer Ware.

## Claims

1. Method for producing a component by hot forming a precursor made of a steel having a TRIP and/or TRIP/TWIP effect, comprising a manganese content of over 12 wt.%, advantageously comprising up to 20 wt.% and an austenite content of at least 25 to 90 vol.%, advantageously at least 35 vol.%, the remainder being ferrite or bainite, martensite, tempered martensite or perlite, **characterised in that** the precursor is formed at a hot forming temperature above 60°C and below the Ac1 transformation temperature and the original austenite content is retained in full after the forming, or at least 10% of the original austenite content is retained after the forming.

2. Method according to claim 1, **characterised in that** after forming, at least 30%, preferably at least 50%, of the original austenite content is retained.

3. Method according to either claim 1 or claim 2, **characterised in that** the precursor is heated to a hot forming temperature above 60°C and below 450°C, preferably below 350°C, particularly preferably below 250°C, and is subsequently formed in this temperature range.

4. Method according to at least one of claims 1 to 3, **characterised in that** the precursor is heated only partially to the hot forming temperature.

5. Method according to at least one of claims 1 to 4, wherein the precursor has the following alloy composition in wt.%:
C: 0.0005 to 0.9, in particular 0.05 to 0.42
Mn: more than 12, in particular > 12 to 20 and particularly > 15 to 20
The remainder being iron including unavoidable steel-accompanying elements, with the optional addition of one or more of the following elements (in wt.%):
Al: up to 10, in particular 0.1 to 5 and particularly > 0.5 to 3
Si: up to 6, in particular 0.05 to 3 and particularly 0.1 to 1.5
Cr: up to 6, in particular 0.1 to 4 and particularly > 0.5 to 2.5
Nb: up to 1, in particular 0.005 to 0.4 and particularly 0.01 to 0.1
V: up to 1.5, in particular 0.005 to 0.6 and particularly 0.01 to 0.3
Ti: up to 1.5, in particular 0.005 to 0.6 and particularly 0.01 to 0.3
Mo: up to 3, in particular 0.005 to 1.5 and particularly 0.01 to 0.4
Cu: up to 3, in particular < 0.5 and particularly < 0.1
Sn: up to 0.5, in particular < 0.2 and particularly < 0.05
W: up to 5, in particular 0.01 to 3 and particularly 0.1 to 1.5
Co: up to 8, in particular 0.01 to 5 and particularly 0.1 to 2
Zr: up to 0.5, in particular 0.005 to 0.3 and particularly 0.01 to 0.2
Ta: up to 0.5, in particular 0.005 to 0.3 and particularly 0.01 to 0.1
Te: up to 0.5, in particular 0.005 to 0.3 and particularly 0.01 to 0.1
B: up to 0.15, in particular 0.001 to 0.08 and particularly 0.002 to 0.01
P: <0.1, in particular <0.04
S: <0.1, in particular <0.02
N: <0.1, in particular <0.05

6. Method according to at least one of claims 1 to 5, **characterised in that** the precursor is provided with a metal or lacquer-like coating prior to heating.

7. Method according to claim 6, **characterised in that** the metal coating contains Zn and/or Mg and/or Al and/or Si, in particular **in that** the metal coating consists of ZnMg, ZnAl, ZnNi, ZnFe, ZnCo, ZnAlCe or ZnMn.

8. Method according to at least one of claims 1 to 7, **characterised in that** the heating to the hot forming temperature is carried out inductively, conductively, by means of radiation or by heat conduction in the forming tool, and the cooling is carried out after the forming of air or is carried out in a technically accelerated manner by means of moving gases, air or liquid media in or outside the forming tool.

9. Method according to at least one of claims 1 to 8, **characterised in that** a sheet metal blank, which consists in particular of a hot strip or cold strip, or a tube is used as the precursor.

10. Method according to claim 9, **characterised in that** the tube is a welded tube which is seamlessly hot-rolled or produced from a hot strip or a cold strip and which optionally has an inner coating and/or an outer coating or is optionally subjected to one or more drawing and/or annealing processes in the course of the hot forming.

11. Method according to at least one of claims 1 to 10, **characterised in that** the component is subjected to a final cold forming after the hot forming.

12. Method according to claim 11, **characterised in that** the cold forming is carried out at a temperature of up to -196°C.

13. Method for producing a steel strip for producing a component by means of hot forming according to at least one of claims 1 to 12, **characterised by**:
- melting a steel melt containing (in wt.%): C: 0.0005 to 0.9 Mn: more than 12, preferably more than 15, the remainder being iron including unavoidable steel-accompanying elements, with the optional addition of one or more of the following elements (in wt.%):
Al: up to 10, Si: up to 6, Cr: up to 6, Nb: up to 1.0, V: up to 1.5, Ti: up to 1.5, Mo: up to 3, Cu: up to 3, Sn: up to 0.5, W: up to 5, Co: up to 8, Zr: up to 0.5, Ta: up to 0.5, Te: up to 0.5, B: up to 0.15, P: max. 0.1, S: max. 0.1, N: max. 0.1, Ca up to 0.1.
- casting the molten steel to form a near-net strip by means of a near-net-shape horizontal or vertical strip casting method or casting the steel melt to form a slab or thin slab by means of a horizontal or vertical slab or thin slab casting process,
- reheating the slab or thin slab from 1050°C to 1250°C and subsequently hot rolling the slab or thin slab to form a hot strip or sheet or reheating the near-net strip produced in a near-net-shape process, which near-net strip in particular has a thickness greater than 3 mm, from 1000°C to 1200°C and subsequently hot rolling the near-net strip to form a hot strip or sheet or hot rolling the near-net strip without reheating from the casting heat to form a hot strip or sheet with optional intermediate heating between individual rolling passes of the hot rolling,
- coiling the hot strip and optionally the sheet at a coiling temperature between 780°C and room temperature,
- optionally annealing the hot strip or sheet with the following parameters: annealing temperature: 450 to 900°C, annealing duration: 1 minute to 48 hours,
- optionally cold rolling the near-net strip which is produced in a near-net-shape process and has a thickness of less than 5 mm to form the cold strip or optionally TWIP rolling at a hot forming temperature of 60°C and below the Ac1 transformation temperature of the hot strip and subsequently cooling to room temperature
- optionally annealing the cold strip with the following parameters:
annealing temperature: 450 to 900°C, annealing duration: 1 minute to 48 hours.

14. Hot-formed component produced according to at least one of claims 1 to 12, having a minimum tensile strength Rm from 700 MPa to 2000 MPa, preferably 850 to 1800 MPa, particularly preferably more than 1000 to 1800 MPa, with at the same time a high elongation at break A80 of more than 3 to 40%, preferably more than 6%.

15. Hot-formed component according to claim 14 for use in the automotive and utility vehicle industry, in mechanical engineering, in construction or for the production of white goods.

## Revendications

1. Procédé de fabrication d'un composant par formage à chaud d'un produit semi-fini en acier à effet TRIP et/ou TRIP/TWIP ayant une teneur en manganèse supérieure à 12 % en poids, avantageusement jusqu'à 20 % en poids et une teneur en austénite d'au moins 25 à 90 % en volume, avantageusement d'au moins 35 % en volume, le reste étant de la ferrite ou la bainite, de la martensite, de la martensite revenue ou de la perlite, **caractérisé en ce que** le produit semi-fini est formé à une température de formage à chaud supérieure à 60 °C et inférieure à la température de transformation Ac1 et la teneur en austénite d'origine est entièrement conservée après le formage ou au moins 10 % de la teneur en austénite d'origine est conservée après le formage.

2. Procédé selon la revendication 1, **caractérisé en ce que** la teneur en austénite d'origine est conservée à au moins 30 %, avantageusement au moins 50 %, après le formage.

3. Procédé selon la revendication 1 ou 2, **caractérisé en ce que** le produit semi-fini est chauffé à une température de formage à chaud supérieure à 60 °C et inférieure à 450 °C, de préférence inférieure à 350 °C, de manière particulièrement préférée inférieure à 250 °C, puis est mis en forme dans cette gamme de températures.

4. Procédé selon l'une au moins des revendications 1 à 3, **caractérisé en ce que** le produit semi-fini n'est que partiellement chauffé à la température de formage à chaud.

5. Procédé selon l'une au moins des revendications 1 à 4, le produit semi-fini a la composition d'alliage suivante en % en poids :
C: 0,0005 à 0,9, notamment 0,05 à 0,42
Mn: plus de 12, notamment > 12 à 20 et notamment > 15 à 20
le reste étant du fer incluant des éléments incontournables accompagnant l'acier, avec en option l'ajout d'un ou plusieurs des éléments suivants (en % en poids) :
Al: jusqu'à 10, en particulier 0,1 à 5 et notamment > 0,5 à 3
Si: jusqu'à 6, en particulier de 0,05 à 3 et notamment de 0,1 à 1,5
Cr: jusqu'à 6, en particulier 0,1 à 4 et notamment > 0,5 à 2,5
Nb: jusqu'à 1, en particulier 0,005 à 0,4 et notamment 0,01 à 0,1
V: jusqu'à 1,5, en particulier 0,005 à 0,6 et notamment 0,01 à 0,3
Ti: jusqu'à 1,5, en particulier 0,005 à 0,6 et notamment 0,01 à 0,3
Mo: jusqu'à 3, en particulier 0,005 à 1,5 et notamment 0,01 à 0,4
Cu: jusqu'à 3, en particulier < 0,5 et notamment < 0,1
Sn: jusqu'à 0,5, en particulier < 0,2 et notamment < 0,05
W: jusqu'à 5, en particulier 0,01 à 3 et notamment 0,1 à 1,5
Co: jusqu'à 8, en particulier 0,01 à 5 et notamment 0,1 à 2
Zr: jusqu'à 0,5, en particulier 0,005 à 0,3 et notamment 0,01 à 0,2
Ta: jusqu'à 0,5, en particulier 0,005 à 0,3 et notamment 0,01 à 0,1
Te: jusqu'à 0,5, en particulier 0,005 à 0,3 et notamment 0,01 à 0,1
B: jusqu'à 0,15, en particulier 0,001 à 0,08 et notamment 0,002 à 0,01
P: < 0,1, en particulier < 0,04
S: < 0,1, en particulier < 0,02
N: < 0,1, en particulier < 0,05.

6. Procédé selon l'une au moins des revendications 1 à 5, **caractérisé en ce que** le produit semi-fini est pourvu d'un revêtement métallique ou de type peinture avant chauffage.

7. Procédé selon la revendication 6, **caractérisé en ce que** le revêtement métallique contient du Zn et/ou du Mg et/ou de l'Al et/ou du Si, en particulier **en ce que** le revêtement métallique est en ZnMg, ZnAl, ZnNi, ZnFe, ZnCo, ZnAlCe ou ZnMn.

8. Procédé selon l'une au moins des revendications 1 à 7, **caractérisé en ce que** le chauffage à la température de formage à chaud est effectué par induction, par conduction, par rayonnement ou par conduction thermique dans l'outillage de formage et le refroidissement est effectué après le formage à l'air, ou en étant accélérée techniquement au moyen de gaz, d'air ou de fluides liquides en mouvement à l'intérieur ou à l'extérieur de l'outil de formage.

9. Procédé selon l'une au moins des revendications 1 à 8, **caractérisé en ce qu'**une plaque de tôle, qui est notamment un feuillard à chaud ou un feuillard à froid, ou un tube est utilisé comme produit semi-fini.

10. Procédé selon la revendication 9, **caractérisé en ce que** le tube est un tube laminé à chaud sans soudure ou un tube soudé qui est fabriqué à partir d'un feuillard à chaud ou à froid et qui comporte éventuellement un revêtement intérieur et/ou extérieur ou qui a éventuellement été soumis à un ou plusieurs processus d'étirage et/ou ou de recuit.

11. Procédé selon l'une au moins des revendications 1 à 10, **caractérisé en ce que** le composant est soumis à un formage à froid final après le formage à chaud.

12. Procédé selon la revendication 11, **caractérisé en ce que** le formage à froid est réalisé à une température allant jusqu'à -196 °C.

13. Procédé de fabrication d'un feuillard d'acier destiné à la fabrication d'un composant par formage à chaud selon l'une au moins des revendications 1 à 12, **caractérisé par** les étapes suivantes:
- produire un acier en fusion contenant (en % en poids): C: 0,0005 à 0,9, Mn: plus de 12, de préférence plus de 15, le reste étant du fer incluant des éléments inévitables liés à l'acier, avec un ajout éventuel d'un ou plusieurs des éléments suivants (en % en poids): Al: jusqu'à 10, Si: jusqu'à 6, Cr: jusqu'à 6, Nb: jusqu'à 1,0, V: jusqu'à 1,5, Ti: jusqu'à 1,5, Mo: jusqu'à 3, Cu: jusqu'à 3, Sn: jusqu'à 0,5, W: jusqu'à 5, Co: jusqu'à 8, Zr: jusqu'à 0,5, Ta: jusqu'à 0,5, Te: jusqu'à 0,5, B: jusqu'à 0,15, P: 0,1 max., S: 0,1 max., N: 0,1 max., Ca: jusqu'à 0,1.
- couler l'acier en fusion pour obtenir une pré-feuillard au moyen d'un procédé de coulée de feuillard horizontale ou verticale proche des dimensions finales ou couler l'acier en fusion pour obtenir une brame ou une brame mince au moyen d'un procédé de coulée de brame ou de brame mince horizontale ou verticale,
- chauffer à nouveau la brame ou la brame mince jusqu'à 1050 °C-1250 °C puis laminer à chaud la brame ou la brame mince pour obtenir un feuillard à chaud ou une tôle forte ou chauffer à nouveau la pré-feuillard proche des dimensions finales, en particulier avec une épaisseur supérieure à 3 mm, jusqu'à 1000 °C-1200 °C puis laminer à chaud la pré-feuillard pour obtenir un feuillard à chaud ou une tôle forte ou laminer à chaud la pré-feuillard sans chauffer à nouveau à partir de la chaleur de coulée pour obtenir un feuillard à chaud ou une tôle forte avec chauffage intermédiaire éventuel entre les passes de laminage individuelles du laminage à chaud,
- bobiner le feuillard à chaud et éventuellement la tôle forte à une température de bobinage comprise entre 780 °C et la température ambiante,
- recuire éventuellement le feuillard à chaud ou la tôle forte avec les paramètres suivants: température de recuit: 450 à 900 °C, temps de recuit: 1 minute à 48 heures,
- éventuellement laminer à froid la pré-feuillard proche des dimensions finales avec une épaisseur inférieure à 5 mm pour obtenir un feuillard à froid ou éventuellement effectuer un laminage TWIP à une température de formage à chaud de 60 °C et inférieure à la température de transformation Ac1 du feuillard à chaud puis refroidir à la température ambiante,
- éventuellement recuire le feuillard à froid avec les paramètres suivants : température de recuit: 450 à 900 °C, temps de recuit : 1 minute à 48 heures.

14. Composant formée à chaud, fabriqué selon l'une au moins des revendications 1 à 12, présentant une résistance minimale à la traction Rm de 700 MPa à 2000 MPa, de préférence de 850 à 1800 MPa, de manière particulièrement préférée supérieure à 1000 à 1800 MPa, avec en même temps un allongement à la rupture A80 élevé de plus de 3 à 40 %, de préférence de plus de 6%.

15. Composant formé à chaud selon la revendication 14 destiné à être utilisé dans l'industrie automobile et des véhicules utilitaires, en construction mécanique, dans le bâtiment ou la production de gros appareils ménagers.
